# EUROPEAN PATENT APPLICATION

(11) **EP 3 217 585 A1**
(43) Date of publication of application: **13.09.2017**
(21) Application number: 14905396.9
(22) Date of filing: 07.11.2014
(51) Int. Cl.: H04L 1/06, H04B 7/06

(54) **METHOD AND APPARATUS FOR ALLOCATING RESOURCE FOR DM-RS, AND COMMUNICATION SYSTEM**

(71) Applicant: Fujitsu Limited, Kawasaki-shi, Kanagawa 211-8588 (JP)
(72) Inventor: ZHANG, Yi, Beijing 100025 (CN); ZHOU, Hua, Beijing 100025 (CN)
(74) Representative: Cooper-Rolfe, Elizabeth Louise
(86) International application number: PCT/CN2014/090648
(87) International publication number: WO 2016/070430

(57) **Abstract**

A method and apparatus for configuring a DM-RS resource and a communication system, applicable to a 3D MIMO system. The method includes: configuring, by a base station, resources for transmitting DM-RSs for multiple pieces of UE performing MU-MIMO; wherein resource elements in a subframe for transmitting DM-RSs are divided into multiple groups, so that a density of resource elements transmitting DM-RSs for at least one piece of UE or at least one stream is lowered. Hence, not only the UE is enabled to support high-dimension MU-MIMO, but also a DM-RS density of a center UE may be lowered, so as to improve resource utilization.

## Description

### Technical Field

This disclosure relates to the field of communication technologies, and in particular to a method and apparatus for configuring a demodulation reference signal (DM-RS) resource in a three-dimensional multiple input multiple output (3D MIMO) system and a communication system.

### Background

With development of antenna technologies, a two-dimensional active antenna array may be arranged at a transmitting apparatus, and three-dimensional beams may be formed by flexible weighting of antenna coefficients. The three-dimensional multi-antenna technology is able to improve antenna gains, reduce beam widths and reduce interference on one hand, and on the other hand, it may improve multiplexing efficiency of system by spatially multiplexing more pieces of user equipment (UE). Hence, the three-dimensional multi-antenna technology may outstandingly improve transmission efficiency and reliability of the system, and is a hot candidate technology for the future mobile communication system.

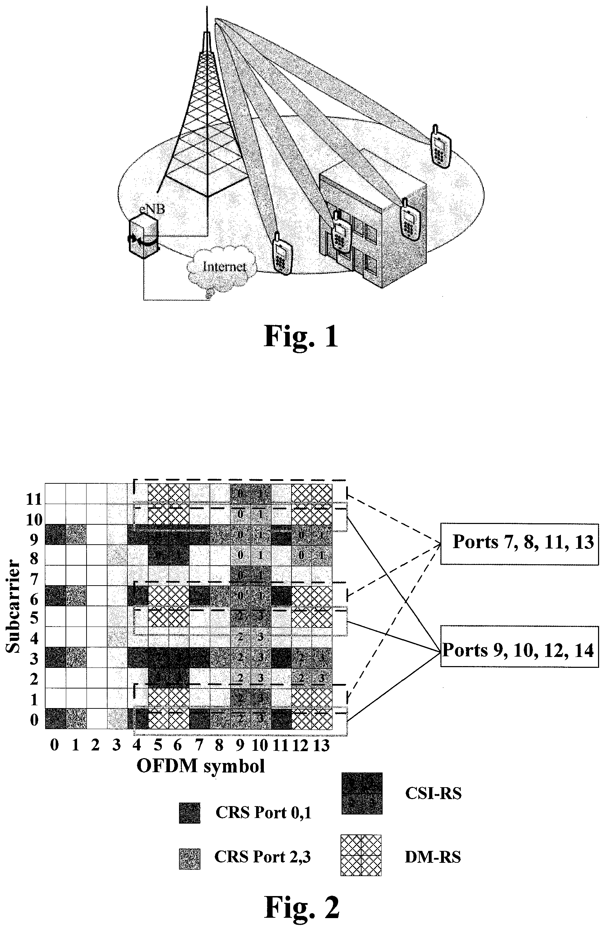

Compared with the two-dimensional multi-antenna technology, the three-dimensional multi-antenna technology has better spatial separation, and is able to support multiplexing transmission for more user equipment. FIG. 1 is a schematic diagram of multiple-user MIMO (MU-MIMO) in 3D MIMO. As shown in FIG. 1, the 3D multi-antenna system is added with a vertical dimension, and the number of dimensions of MU-MIMO that can be supported by the system may further be increased.

It should be appreciated that the above description of the background is merely provided for clear and complete explanation of this disclosure and for easy understanding by those skilled in the art. And it should not be understood that the above technical solution is known to those skilled in the art as it is described in the background of this disclosure.

### Summary

Currently, in an existing long term evolution (LTE) system, in consideration of a tradeoff between the system performance gain and reference signal overhead, dimensions of the MU-MIMO that are supported by the system are limited, each piece of user equipment supports transmission of a maximum rank of 2, and a maximum sum rank of the MU-MIMO is 4. In order to support transmission of high-dimension MU-MIMO, DM-RS-related information needs to be enhanced to ensure reliable demodulation of data.

Furthermore, it was found by the inventors that densities of DM-RSs may be different for center UE and edge UE. However, densities of DM-RSs for different pieces of UE are not further differentiated in existing standards, and resource utilization cannot be further improved.

Embodiments of this disclosure provide a method and apparatus for configuring a DM-RS resource and a communication system, in which not only UE is enabled to support high-dimension MU-MIMO, but also densities of DM-RSs of center UE may be lowered, thereby improving resource utilization.

According to a first aspect of the embodiments of this disclosure, there is provided a method for configuring DM-RS resources, applicable to a 3D MIMO system, the method including:
configuring, by a base station, resources for transmitting DM-RSs for multiple pieces of UE performing MU-MIMO; resource elements in a subframe for transmitting DM-RSs are divided into multiple groups, so that a density of resource elements transmitting DM-RSs for at least one piece of UE or at least one stream is lowered.

According to a second aspect of the embodiments of this disclosure, there is provided an apparatus for configuring a DM-RS resource, applicable to a 3D MIMO system, the apparatus including:
a resource configuring unit configured to configure resources for transmitting DM-RSs for multiple pieces of UE performing MU-MIMO; resource elements in a subframe for transmitting DM-RSs are divided into multiple groups, so that a density of resource elements transmitting DM-RSs for at least one piece of UE or at least one stream is lowered.

According to a third aspect of the embodiments of this disclosure, there is provided a communication system, including:
a base station configured to configure resources for transmitting DM-RSs for multiple pieces of UE performing MU-MIMO; resource elements in a subframe for transmitting DM-RSs are divided into multiple groups, so that a density of resource elements transmitting DM-RSs for at least one piece of UE or at least one stream is lowered.

According to another aspect of the embodiments of this disclosure, there is provided a computer readable program code, which, when executed in a base station, will cause a computer unit to carry out the method for configuring DM-RS resources as described above in the base station.

According to a further aspect of the embodiments of the present disclosure, there is provided a computer readable medium, including a computer readable program code, which will cause a computer unit to carry out the method for configuring DM-RS resources as described above in a base station.

An advantage of the embodiments of this disclosure exists in that the base station configures resources for transmitting DM-RSs for multiple pieces of UE performing MU-MIMO; resource elements in a subframe for transmitting DM-RSs are divided into multiple groups, so that a density of resource elements transmitting DM-RSs for at least one piece of UE or at least one stream is lowered. Hence, not only UE is enabled to support high-dimension MU-MIMO, but also densities of DM-RSs of center UE may be lowered, thereby improving resource utilization.

With reference to the following description and drawings, the particular embodiments of this disclosure are disclosed in detail, and the principle of this disclosure and the manners of use are indicated. It should be understood that the scope of the embodiments of this disclosure is not limited thereto. The embodiments of this disclosure contain many alternations, modifications and equivalents within the scope of the terms of the appended claims.

Features that are described and/or illustrated with respect to one embodiment may be used in the same way or in a similar way in one or more other embodiments and/or in combination with or instead of the features of the other embodiments.

It should be emphasized that the term "comprise/include" when used in this specification is taken to specify the presence of stated features, integers, steps or components but does not preclude the presence or addition of one or more other features, integers, steps, components or groups thereof.

### Brief Description of the Drawings

Many aspects of the disclosure can be better understood with reference to the following drawings. The components in the drawings are not necessarily to scale, emphasis instead being placed upon clearly illustrating the principles of the present disclosure. To facilitate illustrating and describing some parts of the disclosure, corresponding portions of the drawings may be exaggerated or reduced.

Elements and features depicted in one drawing or embodiment of the disclosure may be combined with elements and features depicted in one or more additional drawings or embodiments. Moreover, in the drawings, like reference numerals designate corresponding parts throughout the several views and may be used to designate like or similar parts in more than one embodiment.
FIG. 1 is a schematic diagram of multiple user MIMO in 3D MIMO;
FIG. 2 is a schematic diagram of a DM-RS resource in an existing standard;
FIG. 3 is a schematic diagram of a mapping relationship between a codeword and a layer in an LTE-A system;
FIG. 4 is a flowchart of the method for configuring DM-RS resources of an embodiment of this disclosure;
FIG. 5 is a schematic diagram of DM-RS grouping of an embodiment of this disclosure;
FIG. 6 is another schematic diagram of DM-RS grouping of the embodiment of this disclosure;
FIG. 7 is a further schematic diagram of DM-RS grouping of the embodiment of this disclosure;
FIG. 8 is still another schematic diagram of DM-RS grouping of the embodiment of this disclosure;
FIG. 9 is yet another schematic diagram of DM-RS grouping of the embodiment of this disclosure;
FIG. 10 is still yet another schematic diagram of DM-RS grouping of the embodiment of this disclosure;
FIG. 11 is a schematic diagram of mapping from ports to REs of an embodiment of this disclosure;
FIG. 12 is another schematic diagram of mapping from ports to REs of an embodiment of this disclosure;
FIG. 13 is a flowchart of the method for configuring DM-RS resources of an embodiment of this disclosure;
FIG. 14 is a schematic diagram of a structure of the apparatus for configuring DM-RS resources of an embodiment of this disclosure;
FIG. 15 is a schematic diagram of a structure of the base station of an embodiment of this disclosure; and
FIG. 16 is a schematic diagram of a structure of the communication system of an embodiment of this disclosure.

### Detailed Description

These and further aspects and features of the present disclosure will be apparent with reference to the following description and attached drawings. In the description and drawings, particular embodiments of the disclosure have been disclosed in detail as being indicative of some of the ways in which the principles of the disclosure may be employed, but it is understood that the disclosure is not limited correspondingly in scope. Rather, the disclosure includes all changes, modifications and equivalents coming within the terms of the appended claims.

FIG. 2 is a schematic diagram of a DM-RS resource in an existing standard. As shown in FIG. 2, ports 7, 8, 11 and 13 and ports 9, 10, 12 and 14 are respectively multiplexed in a code division manner, and are multiplexed therebetween in a frequency division manner. In performing multiple user transmission, each piece of user equipment only uses ports 7 and 8 at most, that is, only using resource elements of 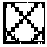 in a dotted frame in FIG. 2.

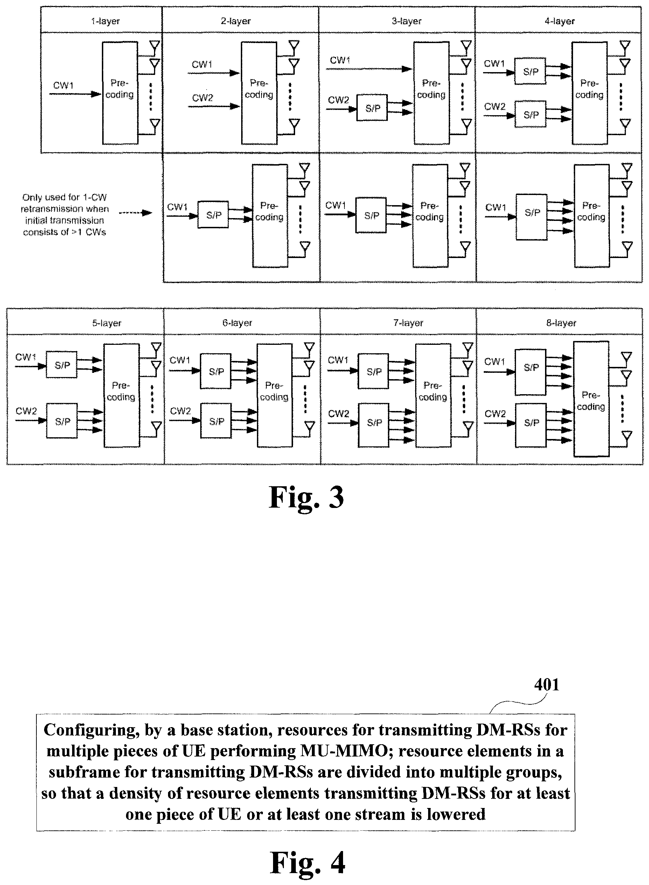

FIG. 3 is a schematic diagram of a mapping relationship between a codeword and a layer in an LTE-A system. As shown in FIG. 3, the system has two codewords (CWs) and eight layers at most, each codeword corresponding to four layers at most.

In downlink control information (DCI) 2C/2D of a control channel, indication on ports, scrambling sequences and numbers of layers is as shown in Table 1 below. Table 1 shows indication information on an antenna port, scrambling identifier and the number of layers in the existing standard.

**Table 1**

| One codeword: codeword 0 is enabled, codeword 1 is disabled | | Two codewords: codeword 0 is enabled, codeword 1 is enabled | |
|---|---|---|---|
| Value | Message | Value | Message |
| 0 | 1 layer, port 7, nSCID=0 | 0 | 2 layers, ports 7-8, nSCID=0 |
| 1 | 1 layer, port 7, nSCID=1 | 1 | 2 layers, ports 7-8, nSCID=1 |
| 2 | 1 layer, port 8, nSCID=0 | 2 | 3 layers, ports 7-9 |
| 3 | 1 layer, port 8, nSCID=1 | 3 | 4 layers, ports 7-10 |
| 4 | 2 layers, ports 7-8 | 4 | 5 layers, ports 7-11 |
| 5 | 3 layers, ports 7-9 | 5 | 6 layers, ports 7-12 |
| 6 | 4 layers, ports 7-10 | 6 | 7 layers, ports 7-13 |
| 7 | Reserved | 7 | 8 layers, ports 7-14 |

As shown in Table 1, a base station may transmit the ports, scrambling identifier and the number of layers to the user equipment via dynamic signaling of 3 bits, such that the user equipment performs channel estimation and demodulation with respect to DM-RS.

However, in order to support transmission of high-dimension MU-MIMO, the information shown in Table 1, for example, cannot satisfy the demands of the system, and the information on the DM-RS needs to be enhanced to ensure reliable demodulation of the data. The embodiments of this disclosure shall be described below in detail.

### Embodiment 1

An embodiment of this disclosure provides a method for configuring DM-RS resources, applicable to a 3D MIMO system. FIG. 4 is a flowchart of the method for configuring DM-RS resources of an embodiment of this disclosure. As shown in FIG. 4, the method includes:
step 401: configuring, by a base station, resources for transmitting DM-RSs for multiple pieces of UE performing MU-MIMO; in which resource elements in a subframe for transmitting DM-RSs are divided into multiple groups, so that a density of resource elements transmitting DM-RSs for at least one piece of UE or at least one stream is lowered.

In this embodiment, densities of DM-RSs needed by edge UE and center UE may be different. A typical MU-MIMO scenario is directed to UE with good channel quality (center UE). For the center UE, a density of DM-RSs may be lowered. As to a density of resource elements (REs) transmitting DM-RSs, comparison is performed in the embodiment of this disclosure by taking a density of REs defined in LTE Rel. 10-12 as a reference, that is, a density of the REs transmitting DM-RSs in the embodiment of this disclosure is lowered, compared to the density of REs defined in LTE Rel. 10-12.

In this embodiment, the UE is center UE. The resource elements transmitting DM-RSs may be, for example, 12 resource elements in a time-frequency resource of a subframe, the 12 resource elements being divided into 2 or 3 groups. As shown FIG. 2, the 12 REs may be 12 REs with orthogonal frequency division multiplexing (OFDM) symbols being 5, 6, 12 and 13 and serial numbers of subcarriers being 1, 6 and 11, and may also be 12 REs with OFDM symbols being 5, 6, 12 and 13 and serial numbers of subcarriers being 0, 5 and 10.

In the following embodiments, description is given taking 12 REs in a subframe (i.e. 12 REs in the dotted frame in FIG. 2, which correspond to ports 7 and 8 in the existing standards) as an example. For the convenience of the following description, the 12 REs in the subframe at the specific positions (i.e. the dotted frame) shown in FIG. 2 are only referred to as 12 REs in brief, and 24 REs in the subframe at the specific positions (i.e. the dotted frame and a solid frame) shown in FIG. 2 are referred to as 24 REs.

For example, each group may use 6 REs / 4 REs, and previous 12 REs (corresponding to ports 7, 8) are divided into 2/3 groups and serve for two/three pieces of UE, this is equivalent to differentiating the DM-RSs of the UE in a frequency division multiplexing (FDM) plus time division multiplexing (TDM) manner.

In this embodiment, a principle of grouping the DM-RSs may be that estimated performances of channels of each group of DM-RSs are as similar as possible, and channel estimation abilities of each group of DM-RSs are as good as possible. After resource elements in a subframe transmitting DM-RSs are divided into multiple groups, a density of resource elements transmitting DM-RSs for at least one piece of UE is lowered, or a density of resource elements transmitting DM-RSs for at least one stream (for example, the same UE may have several streams) is lowered.

How to group shall be described below in detail by way of examples.

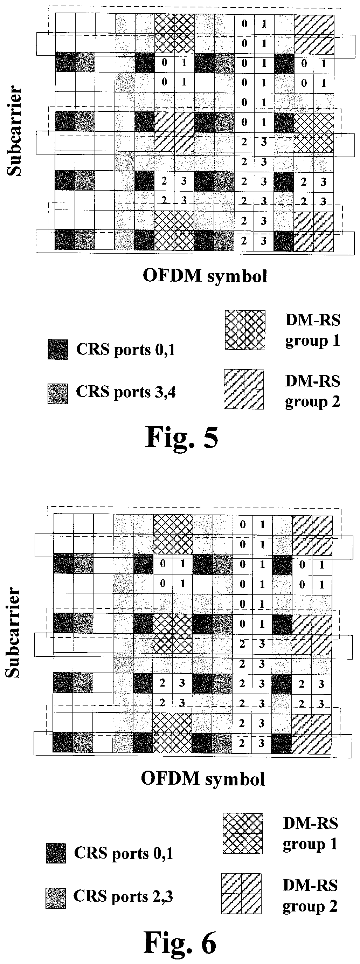

FIG. 5 is a schematic diagram of DM-RS grouping of an embodiment of this disclosure. Twenty-four resource elements are divided into two groups (denoted by 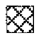 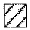 respectively). For example, REs in group 1 may be used for DM-RS transmission of UE 1, and REs in group 2 may be used for DM-RS transmission of UE 2.

FIG. 6 is another schematic diagram of DM-RS grouping of the embodiment of this disclosure. Twenty-four resource elements are divided into two groups (denoted by 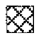 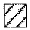 respectively). For example, REs in group 1 may be used for DM-RS transmission of UE 1, and REs in group 2 may be used for DM-RS transmission of UE 2.

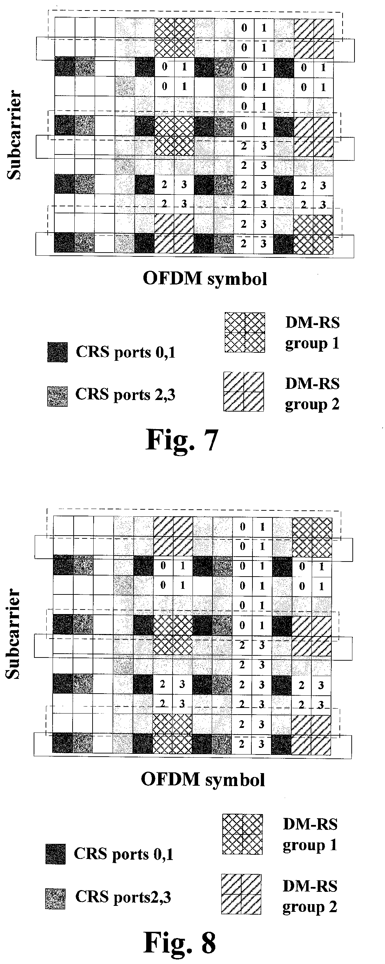

FIG. 7 is a further schematic diagram of DM-RS grouping of the embodiment of this disclosure. Twenty-four resource elements are divided into two groups (denoted by 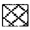 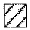 respectively). For example, REs in group 1 may be used for DM-RS transmission of UE 1, and REs in group 2 may be used for DM-RS transmission of UE 2.

FIG. 8 is still another schematic diagram of DM-RS grouping of the embodiment of this disclosure. Twenty-four resource elements are divided into two groups (denoted by 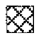 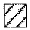 respectively). For example, REs in group 1 may be used for DM-RS transmission of UE 1, and REs in group 2 may be used for DM-RS transmission of UE 2.

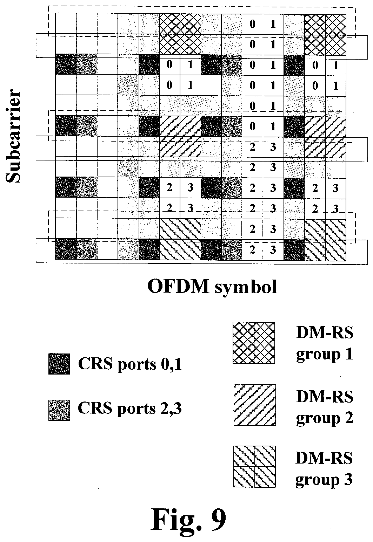

FIG. 9 is yet another schematic diagram of DM-RS grouping of the embodiment of this disclosure. Twenty-four resource elements are divided into three groups (denoted by 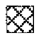 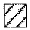 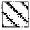 respectively). For example, REs in group 1 may be used for DM-RS transmission of UE 1, REs in group 2 may be used for DM-RS transmission of UE 2, and REs in group 3 maybe used for DM-RS transmission of UE 3.

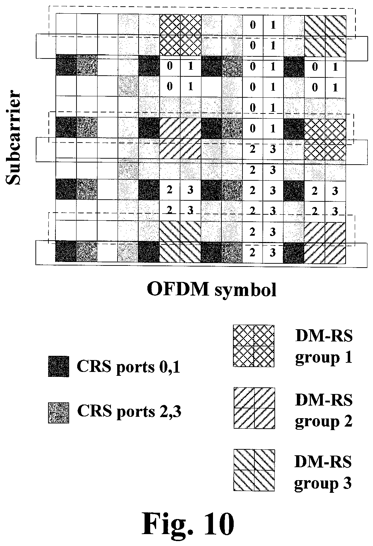

FIG. 10 is still yet another schematic diagram of DM-RS grouping of the embodiment of this disclosure. Twenty-four resource elements are divided into three groups (denoted by 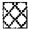 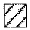 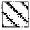 respectively). For example, REs in group 1 may be used for DM-RS transmission of UE 1, REs in group 2 may be used for DM-RS transmission of UE 2, and REs in group 3 may be used for DM-RS transmission of UE 3.

It should be appreciated that DM-RS grouping is only illustratively shown in FIGs. 5-10. However, this disclosure is not limited thereto, and a particular group manner may be determined according to an actual situation. For example, only a normal subframe is described above, furthermore, REs used by DM-RSs in an extended subframe may be grouped.

It can be seen from the above embodiment that the base station configures resources for transmitting DM-RSs for multiple pieces of UE performing MU-MIMO; in which resource elements in a subframe for transmitting DM-RSs are divided into multiple groups. Hence, not only the UE is enabled to support high-dimension MU-MIMO, but also densities of DM-RSs of center UE may be lowered, thereby improving resource utilization.

### Embodiment 2

On the basis of Embodiment 1, mapping from ports of DM-RSs to physical resources shall be described in this embodiment. In which, contents identical to those in Embodiment 1 shall not be described herein any further.

In this embodiment, one of multiple groups of resource elements may be mapped to ports 7, 8 of a piece of UE or a stream, and another group of resource elements may be mapped to ports 7, 8 of another piece of UE or another stream; and/or, a group of resource elements is mapped to ports 9, 10 of a piece of UE or a stream, and another group of resource elements is mapped to ports 9, 10 of another piece of UE or another stream.

In an implementation, in performing transmission with ranks of 1-4, ports of the DM-RSs may be mapped to the resource elements, so that a density of resource elements used by the DM-RSs is lowered; and in performing transmission with ranks of 5-8, the ports of the DM-RSs may be mapped to the resource elements, so that a density of resource elements used by the DM-RSs is unchanged.

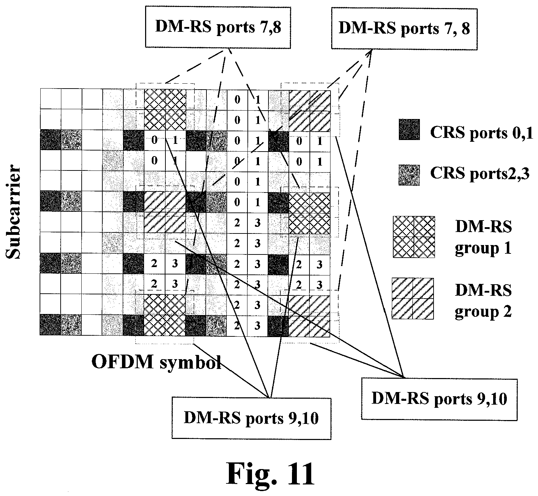

FIG. 11 is a schematic diagram of mapping from ports to REs of an embodiment of this disclosure. As shown in FIG. 11, in performing transmission with ranks of 1-4 for UE by using low-density DM-RSs, DM-RS sequences of ports 7, 8 are mapped to REs in the dotted frame, and DM-RS sequences of ports 9, 10 are mapped to REs in the solid frame.

For example, ports 7, 8 are differentiated in an orthogonal cover code (OCC) manner, and ports 9, 10 are differentiated in an OCC manner. For transmission with ranks of 5-8, an existing transmission method is followed (that is, ports 7, 8, 11, 13 of DM-RSs are mapped to 12 REs, and ports 9, 10, 12, 14 of DM-RSs are mapped to 24 REs). Two groups of DM-RSs may be used by different pieces of UE, hence, the number of pieces of UE supported by DM-RSs may be increased or a transmission efficiency may be improved; that is, physical downlink shared channels (PDSCHs) may be transmitted at positions where no DM-RS is mapped, thereby improving the transmission efficiency of the system.

In this implementation, it is equivalent to that for transmission with ranks of 1-4, a density of REs transmitting DM-RSs is lowered by a half, and for transmission with ranks of 5-8, a density of REs transmitting DM-RSs is unchanged, and a previous mapping method is maintained. By adding one group of DM-RSs, more pieces of UE may be accommodated.

It should be appreciated that how to perform mapping from ports to resources is illustrated in FIG. 11 taking the grouping in FIG. 5 as an example. However, this embodiment is not limited thereto. For example, when other grouping manners (such as the grouping shown in FIGs. 6-10) are adopted, a particular mapping manner may be determined according to an actual situation.

In this embodiment, one of the multiple groups of resource elements may be mapped to port 7, another group of resource elements may be mapped to port 8, still another group of resource elements may be mapped to port 9, and yet still another group of resource elements may be mapped to port 10.

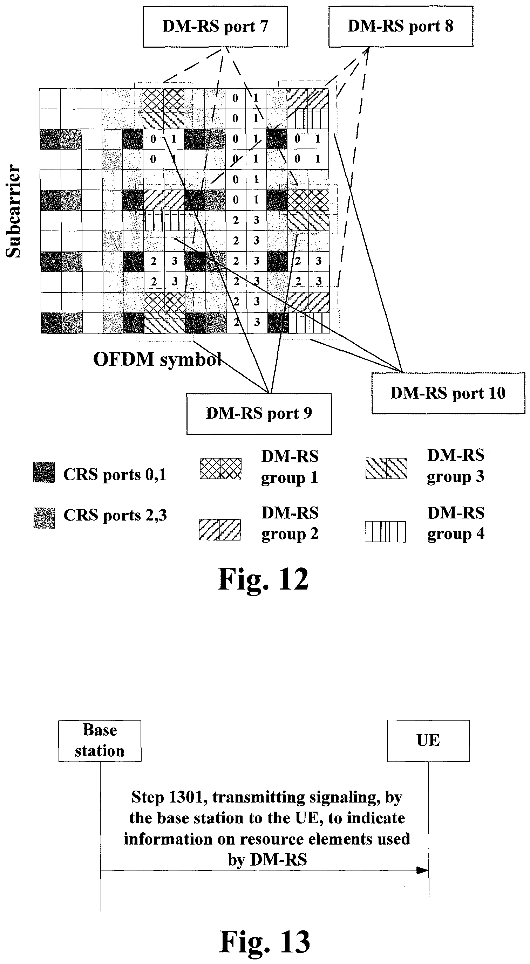

FIG. 12 is another schematic diagram of mapping from ports to REs of the embodiment of this disclosure. As shown in FIG. 12, when the base station uses low-density DM-RSs to transmit for a piece of UE, DM-RS sequences of port 7 are mapped to REs in a dotted frame of a first group of DM-RS resources, DM-RS sequences of port 8 are mapped to REs in a dotted frame of a second group of DM-RS resources, DM-RS sequences of port 9 are mapped to REs in a solid frame of a third group of DM-RS resources, and DM-RS sequences of port 10 are mapped to REs in a solid frame of a fourth group of DM-RS resources.

In an implementation, in performing transmission with ranks of 1-4, the ports of the DM-RSs are mapped to the resource elements, so that the density of the resource elements used by the DM-RSs is lowered; and in performing transmission with ranks of 5-8, the ports of the DM-RSs are mapped to the resource elements, so that the density of the resource elements used by the DM-RSs is unchanged.

That is, in this implementation, corresponding to the transmission with ranks of 1-4, mapping of ports 7, 8, 9, 10 may use the new method shown in FIG. 12.

For example, ports 7, 8 are differentiated in a TDM manner, ports 9, 10 are differentiated in a TDM manner, and ports 7, 8 and ports 9, 10 are differentiated in an FDM manner. For ranks 5-8, in the transmission with ranks of 5-8, the existing transmission method is used (that is, ports 7, 8, 11, 13 of DM-RSs are mapped to 12 REs, and ports 9, 10, 12, 14 of DM-RSs are mapped to 24 REs).

In this implementation, the density of the REs transmitting the DM-RSs corresponding to rank 1 is lowered by a half, and the density of the REs transmitting the DM-RSs corresponding to rank 2 is unchanged, and CDM is changed into TDM, thereby enhancing orthogonality of the UE. For ranks 5-8, a mapping method in existing standards may be followed. In performing MU-MIMO for multiple pieces of low-rank UE, densities of resource elements transmitting DM-RSs are lowered, so as to accommodate more DM-RSs or improve the transmission efficiency of the system.

In the solution shown in FIG. 12, in consideration that each piece of UE of the MU-MIMO supports at most four streams only, in performing mapping of the DM-RS resources, only mapping of ports 7, 8, 9, 10 is optimized, and ports 11-14 are kept in consistence with the existing standards, hence, only mapping method of ports 7-10 is given in FIG. 12.

In another implementation, for the transmission with rank of 1, mapping from ports to REs uses the solution shown in FIG. 12; and for the transmission with ranks of 2-8, mapping from ports to REs uses the prior art, as shown in FIG. 2.

In this implementation, the density of the DM-RSs in performing the transmission with rank of 1 is lowered by a half, and mapping methods for other cases are identical to those in the existing standards, that is, the density of the DM-RSs and mapping methods in performing the transmission with ranks of 2-8 are all identical to existing density and mapping methods. Thus, in performing MU-MIMO for multiple pieces of UE of rank 1, the density of the resource elements for transmitting the DM-RSs is lowered, so as to accommodate more DM-RSs or improve the transmission efficiency of the system. As only the mapping method of rank 1 is changed, there is little effect on the standards.

In another implementation, for the transmission with ranks 1-2, mapping from ports to REs uses the solution shown in FIG. 12; and for the transmission with ranks of 3-8, mapping from ports to REs uses the method in the standards. TDM is introduced in this implementation to multiplex port 7 and port 8, which lowers the requirement on spatial orthogonality in pairing of MU-MIMO user equipment, and improves flexibility of MU-MIMO pairing of the system.

In this implementation, the REs to which port 7 and port 8 correspond, for example, are grouped, hence, for at least one stream to which port 7 or port 8 corresponds, the density of the REs transmitting the DM-RSs is lowered.

It can be seen from the above embodiment that the base station configures resources for transmitting DM-RSs for multiple pieces of UE performing MU-MIMO; in which resource elements in a subframe for transmitting DM-RSs are divided into multiple groups. Furthermore, mapping from ports to REs is performed on the DM-RSs with transmission resources being reduced. Hence, not only the UE is enabled to support high-dimension MU-MIMO, but also densities of DM-RSs of center UE may be lowered, thereby improving resource utilization.

### Embodiment 3

On the basis of Embodiment 1 and/or Embodiment 2, a base station indicating UE shall be described in this embodiment. In which, contents identical to those in Embodiment 1 and/or Embodiment 2 shall not be described herein any further.

In this embodiment, in order to support demodulation of DM-RSs, the base station needs to indicate the UE to use the ports, number of layers and scrambling identifier of the DM-RSs, and existing standards may be referred to for the contents, which shall not be described in this embodiment any further. The base station needs further to indicate following information to the UE: information on DM-RS resources used by the UE and information on total DM-RS resources used by the MU-MIMO, which shall be described below in detail.

FIG. 13 is a flowchart of an information indication method of the embodiment of this disclosure. As shown in FIG. 13, the method includes:
step 1301: transmitting signaling by the base station to the UE, so as to indicate information on the resource elements used by the DM-RSs; in which the information indicates positions and/or a number of the resource elements in a subframe.

For example, the information indicated by the signaling may include: a density of resource elements used by the DM-RSs of the UE, and a total number of resource elements used by the DM-RSs in MU-MIMO; or include: a density of resource elements used by the DM-RSs of the UE, group information to which the resource elements used by the DM-RSs of the UE correspond, and a total number of resource elements used by the DM-RSs in MU-MIMO.

In this embodiment, the signaling may be high-layer signaling, i.e. semi-static signaling, or may be dynamic signaling.

For an implementation of the resource mapping in Embodiment 2, if dynamic signaling is used, it needs to be indicated that: whether the UE uses 6 REs or 12 REs (if 12 REs are used, the previous method for mapping from ports to resources may be followed); whether the UE uses resources of group 1 or group 2; and 12 REs or 24 REs are used by the total DM-RS resources of the MU-MIMO. In this implementation, eight statuses may be indicated by information of 3 bits.

For example, when the UE uses 12 REs, there exist only two statuses, 12 REs and 24 REs. And when the UE uses 6 REs, it needs to be indicated that: for the resources of group 1, up to three statuses of 6 REs, 12 REs and 24 REs, are occupied by the DM-RSs in performing the MU-MIMO; and for the resources of group 2, up to three statuses of 6 REs, 12 REs and 24 REs, are occupied by the DM-RSs in performing the MU-MIMO. There are 8 statuses, and information of 3 bits is used.

In another implementation, semi-static signaling and dynamic signaling may be used for indication. If the semi-static signaling is used to indicate a density of resources for transmitting the DM-RSs, the dynamic signaling indicates that: for a case where the density is 12 REs, information of only 1 bit is needed; and for a case where the density is 6 REs, information of 1 bit is needed to indicate whether the resources of group 1 or the resources of group 2 are used by the UE, and information of 2 bits is used to indicate the total number of resources occupied by the DM-RSs in performing the MU-MIMO, such as indicating whether one of the two groups is occupied and whether the two frequency-division 6 REs (REs to which ports 7-8 and ports 9-10 of single UE correspond) are occupied.

For another implementation of the resource mapping in Embodiment 2, if dynamic signaling is used, it needs to be indicated that: whether the UE uses 6 REs or 12 REs (1 bit); the total number of resources occupied by the DM-RSs in performing the MU-MIMO is 6 REs, 12 REs, 18 REs, 24 REs, up to 3 bits information (or, the total number of resources occupied by the DM-RSs in performing the MU-MIMO is 12 REs or 24 REs, up to 2 bits).

In a further implementation, semi-static signaling and dynamic signaling may be used for indication. If the base station semi-statically configures a density of DM-RSs of the UE according to a position of the UE, the dynamic signaling indicates that the total number of resources occupied by the DM-RSs in performing the MU-MIMO is 6 REs, 12 REs, 18 REs, 24 REs, up to 2 bits information, or indicates that the total number of resources occupied by the DM-RSs in performing the MU-MIMO is 12 REs or 24 REs, up to 1 bit.

For the solution using 2 bits to indicate information on the resources transmitting the DM-RSs, possible resources transmitting the DM-RSs may be flexibly indicated, including 6 REs (rank 1 SU), 12 REs (MU of two pieces of UE of rank 1, or SU of rank 1 or rank 2 of 12 REs of one piece of UE), 18 REs (for example, one piece of UE uses port 7 of a density of 12 REs, and another piece of UE uses port 9 of a density of 6 REs), and 24 REs (four pieces of UE using 6 REs use ports 7, 8, 9, 10). For the solution using 1 bit for indication, it is possible that use of the DM-RSs is limited to some extent, that is, when a density of 6 REs is used, pairing transmission of two pieces of UE must be used; otherwise, a density of 12 REs needs to be configured.

The base station may indicate a density of the DM-RS resources to the UE by using the above method. Advantages of indicating a density of DM-RS resources by dynamic signaling is that flexibility of scheduling is increased, and when there exists no paired UE, the UE may efficiently use the DM-RS resources. When semi-static signaling is used to indicate a density of the DM-RS resources, the base station may determine according the position of the UE, and overhead of the dynamic signaling is saved.

It should be appreciated that the meaning of the above signaling may be indicating the number of resources used by the DM-RSs, and furthermore, it may also be indicating a method for performing rate matching on DM-RSs (such as performing rate matching on 12 REs or 24 REs). And the signaling is described above on the basis that the density of the resource elements transmitting the DM-RSs is changed. However, this disclosure is not limited thereto, and in a case where the density of the resource elements for transmitting the DM-RSs is not changed, the base station may indicate the density of the resource elements used by the DM-RSs via the signaling, so that the UE performs related processing, such as rate matching.

It can be seen from the above embodiment that the base station configures resources for transmitting DM-RSs for multiple pieces of UE performing MU-MIMO; resource elements in a subframe for transmitting DM-RSs are divided into multiple groups. Furthermore, mapping from ports to REs is performed on the DM-RSs with transmission resources being reduced. Hence, not only the UE is enabled to support high-dimension MU-MIMO, but also densities of DM-RSs of center UE may be lowered, thereby improving resource utilization.

### Embodiment 4

An embodiment of this disclosure provides an apparatus for configuring a DM-RS resource, applicable to a 3D MIMO system. The apparatus for configuring a DM-RS resource may be configured in a base station. This embodiment corresponds to the method configuring a DM-RS resource in embodiments 1-3, with identical contents being not going to be described herein any further.

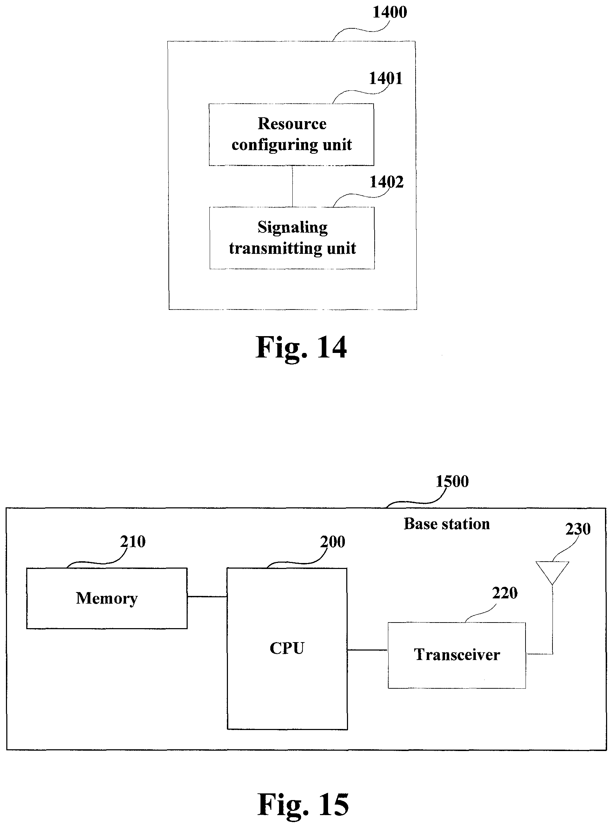

FIG. 14 is a schematic diagram of a structure of the apparatus for configuring DM-RS resources of the embodiment of this disclosure. As shown in FIG. 14, the apparatus 1400 for configuring a DM-RS resource includes:
a resource configuring unit 1401 configured to configure resources for transmitting DM-RSs for multiple pieces of UE performing MU-MIMO; resource elements in a subframe for transmitting DM-RSs are divided into multiple groups, so that a density of resource elements transmitting DM-RSs for at least one piece of UE or at least one stream is lowered.

In this embodiment, one of multiple groups of resource elements may be mapped to ports 7, 8 of a piece of UE or a stream, and another group of multiple groups of resource elements may be mapped to ports 7, 8 of another piece of UE or another stream; and/or a group of resource elements is mapped to ports 9, 10 of a piece of UE or a stream, and another group of resource elements is mapped to ports 9, 10 of another piece of UE or another stream.

For example, DM-RS ports 7, 8 are mapped to two resource elements with OFDM symbols being 5 and 6 and serial numbers of subcarriers being 1, two resource elements with OFDM symbols being 12 and 13 and serial numbers of subcarriers being 6, and two resource elements with OFDM symbols being 5 and 6 and serial numbers of subcarriers being 11; or ports 7, 8 are mapped to two resource elements with OFDM symbols being 5 and 6 and serial numbers of subcarriers being 6, two resource elements with OFDM symbols being 12 and 13 and serial numbers of subcarriers being 1, and two resource elements with OFDM symbols being 12 and 13 and serial numbers of subcarriers being 11;
and DM-RS ports 9, 10 are mapped to two resource elements with OFDM symbols being 5 and 6 and serial numbers of subcarriers being 0, two resource elements with OFDM symbols being 12 and 13 and serial numbers of subcarriers being 5, and two resource elements with OFDM symbols being 5 and 6 and serial numbers of subcarriers being 10; or ports 9, 10 are mapped to two resource elements with OFDM symbols being 5 and 6 and serial numbers of subcarriers being 5, two resource elements with OFDM symbols being 12 and 13 and serial numbers of subcarriers being 0, and two resource elements with OFDM symbols being 12 and 13 and serial numbers of subcarriers being 10.

In this implementation, in performing transmission with ranks of 1-4, ports of the DM-RSs are mapped to the resource elements, so that a density of resource elements used by the DM-RSs is lowered; and in performing transmission with ranks of 5-8, the ports of the DM-RSs are mapped to the resource elements, so that a density of resource elements used by the DM-RSs is unchanged. For example, in performing transmission with ranks of 1-4, ports 7, 8 or ports 9, 10 are differentiated in an orthogonal cover code manner.

In another implementation, one of the multiple groups of resource elements is mapped to port 7, another group of resource elements is mapped to port 8, still another group of resource elements is mapped to port 9, and yet still another group of resource elements is mapped to port 10.

For example, port 7 is mapped to two resource elements with OFDM symbols being 5 and 6 and serial numbers of subcarriers being 1, two resource elements with OFDM symbols being 12 and 13 and serial numbers of subcarriers being 6, and two resource elements with OFDM symbols being 5 and 6 and serial numbers of subcarriers being 11;
port 8 is mapped to two resource elements with OFDM symbols being 5 and 6 and serial numbers of subcarriers being 6, two resource elements with OFDM symbols being 12 and 13 and serial numbers of subcarriers being 1, and two resource elements with OFDM symbols being 12 and 13 and serial numbers of subcarriers being 11;
port 9 is mapped to two resource elements with OFDM symbols being 5 and 6 and serial numbers of subcarriers being 0, two resource elements with OFDM symbols being 12 and 13 and serial numbers of subcarriers being 5, and two resource elements with OFDM symbols being 5 and 6 and serial numbers of subcarriers being 10; and
port 10 is mapped to two resource elements with OFDM symbols being 5 and 6 and serial numbers of subcarriers being 5, two resource elements with OFDM symbols being 12 and 13 and serial numbers of subcarriers being 0, and two resource elements with OFDM symbols being 12 and 13 and serial numbers of subcarriers being 10.

In this implementation, in performing transmission with ranks of 1-4, the ports of the DM-RSs are mapped to the resource elements, so that a density of resource elements used by the DM-RSs is lowered; and in performing transmission with ranks of 5-8, the ports of the DM-RSs are mapped to the resource elements, so that a density of resource elements used by the DM-RSs is unchanged. For example, in performing transmission with ranks of 1-4, ports 7, 8 or ports 9, 10 are differentiated in a time division multiplexing manner, and ports 7, 8 and ports 9, 10 are differentiated in a frequency division multiplexing manner.

Or, in performing transmission with rank of 1, the ports of the DM-RSs are mapped to the resource elements, so that a density of resource elements used by the DM-RSs is lowered; and in performing transmission with ranks of 2-8, the ports of the DM-RSs are mapped to the resource elements, so that a density of resource elements used by the DM-RSs is unchanged.

Or, in performing transmission with ranks of 1-2, the ports of the DM-RSs are mapped to the resource elements, so that a density of resource elements used by the DM-RSs is lowered; and in performing transmission with ranks of 3-8, the ports of the DM-RSs are mapped to the resource elements, so that a density of resource elements used by the DM-RSs is unchanged.

As shown in FIG. 14, the apparatus 1400 for configuring a DM-RS resource may further include:
a signaling transmitting unit 1402 configured to transmit signaling to the UE, so as to indicate information on the resource elements used by the DM-RSs, wherein the information indicates positions and/or a number of the resource elements in the subframe.

For example, the information indicated by the signaling includes: a density of resource elements used by the DM-RSs of the UE, group information to which the resource elements used by the DM-RSs of the UE correspond, and a total number of resource elements used by the DM-RSs in MU-MIMO; or includes: a density of resource elements used by the DM-RSs of the UE, and a total number of resource elements used by the DM-RSs in MU-MIMO.

Furthermore, the signaling may be used to indicate information on performing rate matching on the DM-RSs.

This embodiment further provides a base station, configured with the apparatus 1400 for configuring a DM-RS resource as described above.

FIG. 15 is a schematic diagram of a structure of the base station of the embodiment of this disclosure. As shown in FIG. 15, the base station 1500 may include a central processing unit (CPU) 200 and a memory 210, the memory 210 being coupled to the central processing unit 200. The memory 210 may store various data, and furthermore, it may store a program for information processing, and execute the program under control of the central processing unit 200, so as to receive various information transmitted by the UE, and transmit request information to the UE.

The central processing unit 200 may be configured to carry out the functions of the apparatus 1400 for configuring a DM-RS resource. And the base station 1500 may carry out the method for configuring a DM-RS resource described in embodiments 1-3.

Furthermore, as shown in FIG. 15, the base station 1500 may include a transceiver 220, and an antenna 230, etc. Functions of the above components are similar to those in the prior art, and shall not be described herein any further. It should be appreciated that the base station 1500 does not necessarily include all the parts shown in FIG. 15, and furthermore, the base station 1500 may include parts not shown in FIG. 15, and the relevant art may be referred to.

It can be seen from the above embodiment that the base station configures resources for transmitting DM-RSs for multiple pieces of UE performing MU-MIMO; resource elements in a subframe for transmitting DM-RSs are divided into multiple groups, the resource elements in different groups corresponding to different pieces of UE. Hence, not only the UE is enabled to support high-dimension MU-MIMO, but also densities of DM-RSs of center UE may be lowered, thereby improving resource utilization.

### Embodiment 5

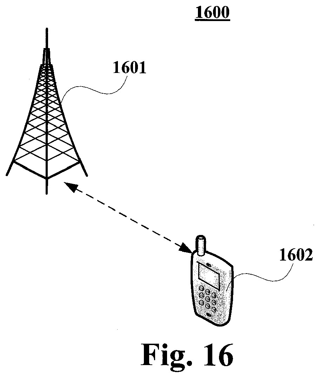

An embodiment of this disclosure provides a communication system. FIG. 16 is a schematic diagram of a structure of the communication system of an embodiment of this disclosure. As shown in FIG. 16, the communication system 1600 includes a base station 1601 and UE 1602. The base station 1601 is configured with the apparatus 1400 for configuring a DM-RS resource described in Embodiment 4.

An embodiment of the present disclosure provides a computer readable program code, which, when executed in a base station, will cause a computer unit to carry out the method configuring a DM-RS resource in embodiments 1-3 in the base station.

An embodiment of the present disclosure provides a computer readable medium, including a computer readable program code, which will cause a computer unit to carry out the method configuring a DM-RS resource in embodiments 1-3 in a base station.

The above apparatuses and methods of the present disclosure may be implemented by hardware, or by hardware in combination with software. The present disclosure relates to such a computer-readable program that when the program is executed by a logic device, the logic device is enabled to carry out the apparatus or components as described above, or to carry out the methods or steps as described above. The present disclosure also relates to a storage medium for storing the above program, such as a hard disk, a floppy disk, a CD, a DVD, and a flash memory, etc.

One or more functional blocks and/or one or more combinations of the functional blocks in the drawings may be realized as a universal processor, a digital signal processor (DSP), an application-specific integrated circuit (ASIC), a field programmable gate array (FPGA) or other programmable logic devices, discrete gate or transistor logic devices, discrete hardware component or any appropriate combinations thereof. And they may also be realized as a combination of computing equipment, such as a combination of a DSP and a microprocessor, multiple processors, one or more microprocessors in communication combination with a DSP, or any other such configuration.

The present disclosure is described above with reference to particular embodiments. However, it should be understood by those skilled in the art that such a description is illustrative only, and not intended to limit the protection scope of the present disclosure. Various variants and modifications may be made by those skilled in the art according to the principle of the present disclosure, and such variants and modifications fall within the scope of the present disclosure.

## Claims

1. A method for configuring demodulation reference signal (DM-RS) resources, applicable to a three-dimensional (3D) multiple input multiple output (MIMO) system, the method comprising:
configuring, by a base station, resources for transmitting DM-RSs for multiple pieces of user equipment (UE) performing multiple-user MIMO (MU-MIMO);
wherein resource elements in a subframe for transmitting DM-RSs are divided into multiple groups, so that a density of resource elements transmitting DM-RSs for at least one piece of UE or at least one stream is lowered.

2. The method according to claim 1, wherein the resource elements transmitting DM-RSs are 12 resource elements in a time-frequency resource of a subframe with orthogonal frequency division multiplexing (OFDM) symbols being 5, 6, 12 and 13 and serial numbers of subcarriers being 1, 6 and 11, and/or
12 resource elements with OFDM symbols being 5, 6, 12 and 13 and serial numbers of subcarriers being 0, 5 and 10, and the resource elements are divided into multiple groups.

3. The method according to claim 2, wherein 8 resource elements with OFDM symbols being 5 and 6 and serial numbers of subcarriers being 0, 1, 10 and 11, and 4 resource elements with OFDM symbols being 12 and 13 and serial numbers of subcarriers being 5 and 6, are arranged in a group; and 8 resource elements with OFDM symbols being 12 and 13 and serial numbers of subcarriers being 0, 1, 10 and 11, and 4 resource elements with OFDM symbols being 5 and 6 and serial numbers of subcarriers being 5 and 6, are arranged in another group;
or, 12 resource elements with OFDM symbols being 5 and 6 and serial numbers of subcarriers being 0, 1, 5, 6, 10 and 11, are arranged in a group, and 12 resource elements with OFDM symbols being 12 and 13 and serial numbers of subcarriers being 0, 1, 5, 6, 10 and 11, are arranged in another group;
or, 8 resource elements with OFDM symbols being 5 and 6 and serial numbers of subcarriers being 5, 6, 10 and 11, and 4 resource elements with OFDM symbols being 12 and 13 and serial numbers of subcarriers being 0 and 1, are arranged in a group; and 8 resource elements with OFDM symbols being 12 and 13 and serial numbers of subcarriers being 5, 6, 10 and 11, and 4 resource elements with OFDM symbols being 5 and 6 and serial numbers of subcarriers being 0 and 1, are arranged in another group;
or, 8 resource elements with OFDM symbols being 5 and 6 and serial numbers of subcarriers being 0, 1, 5 and 6, and 4 resource elements with OFDM symbols being 12 and 13 and serial numbers of subcarriers being 10 and 11, are arranged in a group; and 8 resource elements with OFDM symbols being 12 and 13 and serial numbers of subcarriers being 0, 1, 5 and 6, and 4 resource elements with OFDM symbols being 5 and 6 and serial numbers of subcarriers being 10 and 11, are arranged in another group;
or, 4 resource elements with OFDM symbols being 5 and 6 and serial numbers of subcarriers being 10 and 11, and 4 resource elements with OFDM symbols being 12 and 13 and serial numbers of subcarriers being 10 and 11, are arranged in a group; 4 resource elements with OFDM symbols being 5 and 6 and serial numbers of subcarriers being 5 and 6, and 4 resource elements with OFDM symbols being 12 and 13 and serial numbers of subcarriers being 5 and 6, are arranged in another group; and 4 resource elements with OFDM symbols being 5 and 6 and serial numbers of subcarriers being 0 and 1, and 4 resource elements with OFDM symbols being 12 and 13 and serial numbers of subcarriers being 0 and 1, are arranged in still another group;
or, 4 resource elements with OFDM symbols being 5 and 6 and serial numbers of subcarriers being 10 and 11, and 4 resource elements with OFDM symbols being 12 and 13 and serial numbers of subcarriers being 5 and 6, are arranged in a group; 4 resource elements with OFDM symbols being 5 and 6 and serial numbers of subcarriers being 5 and 6, and 4 resource elements with OFDM symbols being 12 and 13 and serial numbers of subcarriers being 0 and 1, are arranged in another group; and 4 resource elements with OFDM symbols being 5 and 6 and serial numbers of subcarriers being 0 and 1, and 4 resource elements with OFDM symbols being 12 and 13 and serial numbers of subcarriers being 10 and 11, are arranged in still another group.

4. The method according to claim 1, wherein one of the multiple groups of resource elements is mapped to ports 7, 8 of a certain piece of UE or a certain stream, and another group of resource elements is mapped to ports 7, 8 of another piece of UE or another stream; and/or
a group of resource elements is mapped to ports 9, 10 of a certain piece of UE or a certain stream, and another group of resource elements is mapped to ports 9, 10 of another piece of UE or another stream.

5. The method according to claim 4, wherein,
ports 7, 8 are mapped to two resource elements with OFDM symbols being 5 and 6 and serial numbers of subcarriers being 1, two resource elements with OFDM symbols being 12 and 13 and serial numbers of subcarriers being 6, and two resource elements with OFDM symbols being 5 and 6 and serial numbers of subcarriers being 11; or ports 7, 8 are mapped to two resource elements with OFDM symbols being 5 and 6 and serial numbers of subcarriers being 6, two resource elements with OFDM symbols being 12 and 13 and serial numbers of subcarriers being 1, and two resource elements with OFDM symbols being 12 and 13 and serial numbers of subcarriers being 11;
and ports 9, 10 are mapped to two resource elements with OFDM symbols being 5 and 6 and serial numbers of subcarriers being 0, two resource elements with OFDM symbols being 12 and 13 and serial numbers of subcarriers being 5, and two resource elements with OFDM symbols being 5 and 6 and serial numbers of subcarriers being 10; or ports 9, 10 are mapped to two resource elements with OFDM symbols being 5 and 6 and serial numbers of subcarriers being 5, two resource elements with OFDM symbols being 12 and 13 and serial numbers of subcarriers being 0, and two resource elements with OFDM symbols being 12 and 13 and serial numbers of subcarriers being 10.

6. The method according to claim 4, wherein in performing transmission with ranks of 1-4, ports of the DM-RSs are mapped to the resource elements, so that a density of resource elements used by the DM-RSs is lowered; and
in performing transmission with ranks of 5-8, the ports of the DM-RSs are mapped to the resource elements, so that a density of resource elements used by the DM-RSs is unchanged.

7. The method according to claim 1, wherein one of the multiple groups of resource elements is mapped to port 7, another group of resource elements is mapped to port 8, still another group of resource elements is mapped to port 9, and yet still another group of resource elements is mapped to port 10.

8. The method according to claim 7, wherein,
port 7 is mapped to two resource elements with OFDM symbols being 5 and 6 and serial numbers of subcarriers being 1, two resource elements with OFDM symbols being 12 and 13 and serial numbers of subcarriers being 6, and two resource elements with OFDM symbols being 5 and 6 and serial numbers of subcarriers being 11;
port 8 is mapped to two resource elements with OFDM symbols being 5 and 6 and serial numbers of subcarriers being 6, two resource elements with OFDM symbols being 12 and 13 and serial numbers of subcarriers being 1, and two resource elements with OFDM symbols being 12 and 13 and serial numbers of subcarriers being 11;
port 9 is mapped to two resource elements with OFDM symbols being 5 and 6 and serial numbers of subcarriers being 0, two resource elements with OFDM symbols being 12 and 13 and serial numbers of subcarriers being 5, and two resource elements with OFDM symbols being 5 and 6 and serial numbers of subcarriers being 10; and
port 10 is mapped to two resource elements with OFDM symbols being 5 and 6 and serial numbers of subcarriers being 5, two resource elements with OFDM symbols being 12 and 13 and serial numbers of subcarriers being 0, and two resource elements with OFDM symbols being 12 and 13 and serial numbers of subcarriers being 10.

9. The method according to claim 7, wherein in performing transmission with ranks of 1-4, the ports of the DM-RS are mapped to the resource elements, so that a density of resource elements used by the DM-RSs is lowered; and in performing transmission with ranks of 5-8, the ports of the DM-RSs are mapped to the resource elements, so that a density of resource elements used by the DM-RSs is unchanged;
or, in performing transmission with rank of 1, the ports of the DM-RSs are mapped to the resource elements, so that a density of resource elements used by the DM-RSs is lowered; and in performing transmission with ranks of 2-8, the ports of the DM-RSs are mapped to the resource elements, so that a density of resource elements used by the DM-RSs is unchanged;
or, in performing transmission with ranks of 1-2, the ports of the DM-RSs are mapped to the resource elements, so that a density of resource elements used by the DM-RSs is lowered; and in performing transmission with ranks of 3-8, the ports of the DM-RSs are mapped to the resource elements, so that a density of resource elements used by the DM-RSs is unchanged.

10. The method according to claim 9, wherein ports 7 and 8 are differentiated by time division multiplexing or code division multiplexing, or, ports 9 and 10 are differentiated by time division multiplexing or code division multiplexing;
ports 7, 8 and ports 9, 10 are differentiated by frequency division multiplexing.

11. The method according to claim 1, wherein the method further comprises:
transmitting, by the base station, signaling to the UE, so as to indicate information on the resource elements used by the DM-RSs, wherein the information indicates positions and/or a number of the resource elements in the subframe.

12. The method according to claim 11, wherein the information indicated by the signaling includes: a density of resource elements used by the DM-RSs of the UE, group information to which the resource elements used by the DM-RSs of the UE correspond, and a total number of resource elements used by the DM-RSs in MU-MIMO;
or, the information indicated by the signaling includes: a density of resource elements used by the DM-RSs of the UE, and a total number of resource elements used by the DM-RSs in MU-MIMO.

13. The method according to claim 12, wherein the signaling is dynamic signaling, the dynamic signaling including 3 bits of information, and the 3 bits of information indicating the following 8 statuses:
two statuses where the total number of resource elements used by the DM-RSs in MU-MIMO is 12 and 24, when the DM-RSs of the UE use 12 resource elements;
three statuses where the total number of resource elements used by the DM-RSs in MU-MIMO is 6, 12 and 24, when the DM-RSs of the UE use 6 resource elements and a first group of DM-RS resources is used; and
three statuses where the total number of resource elements used by the DM-RSs in MU-MIMO is 6, 12 and 24, when the DM-RSs of the UE use 6 resource elements and a second group of DM-RS resources is used.

14. The method according to claim 12, wherein the signaling is dynamic signaling,
the dynamic signaling including 3 bits of information, wherein one bit of information indicates whether the DM-RSs of the UE use 6 resource elements or 12 resource elements, and the other two bits of information indicate that the total number of resource elements used by the DM-RSs in MU-MIMO is 6, 12, 18 and 24;
or, the dynamic signaling including 2 bits of information, wherein one bit of information indicates whether the DM-RSs of the UE use 6 resource elements or 12 resource elements, and the other one bit of information indicates that the total number of resource elements used by the DM-RSs in MU-MIMO is 12 and 24.

15. The method according to claim 12, wherein the signaling comprises high-layer signaling and dynamic signaling, the high-layer signaling indicating whether the DM-RSs of the UE use 6 resource elements or 12 resource elements,
and the dynamic signaling including 3 bits of information, wherein one bit of information indicates whether the DM-RSs of the UE use a first or second group of resources, another bit of information indicates whether a group of resources that is not used by the UE is used, and the still another bit of information indicates whether all the 24 resource elements used by the DM-RSs are occupied.

16. The method according to claim 12, wherein the signaling comprises high-layer signaling and dynamic signaling, the high-layer signaling indicating whether the DM-RSs of the UE use 6 resource elements or 12 resource elements,
and the dynamic signaling indicating whether a total number of resources occupied by the DM-RSs in performing MU-MIMO is 6 REs, 12 REs, 18 REs or 24 REs; or the dynamic signaling indicating whether a total number of resources occupied by the DM-RSs in performing MU-MIMO is 12 REs or 24 REs.

17. The method according to claim 13, wherein the signaling is further used to indicate information on performing rate matching on the DM-RSs.

18. An apparatus for configuring a DM-RS resource, applicable to a 3D MIMO system, the apparatus comprising:
a resource configuring unit configured to configure resources for transmitting DM-RSs for multiple pieces of UE performing MU-MIMO;
wherein resource elements in a subframe for transmitting DM-RSs are divided into multiple groups, so that a density of resource elements transmitting DM-RSs for at least one piece of UE or at least one stream is lowered.

19. The apparatus according to claim 18, wherein the apparatus further comprises:
a signaling transmitting unit configured to transmit signaling to the UE, so as to indicate information on the resource elements used by the DM-RSs, wherein the information indicates positions and/or a number of the resource elements in the subframe.

20. A communication system, comprising:
a base station configured to configure resources for transmitting DM-RSs for multiple pieces of UE performing MU-MIMO; wherein resource elements in a subframe for transmitting DM-RSs are divided into multiple groups, so that a density of resource elements transmitting DM-RSs for at least one piece of UE or at least one stream is lowered.
